# EUROPEAN PATENT SPECIFICATION

(11) **EP 0 338 758 B1**
(45) Date of publication and mention of the grant of the patent: **20.09.1995**
(21) Application number: 89303800.0
(22) Date of filing: 17.04.1989
(51) Int. Cl.: G02B 6/38

(54) **Optical fiber splice connector**
Faseroptischer Spleissverbinder
Raccord d'épissure de fibre optique

(30) Priority: 18.04.1988 US 182794; 18.04.1988 US 182975
(43) Date of publication of application: 25.10.1989
(73) Proprietor: MINNESOTA MINING AND MANUFACTURING COMPANY, St. Paul, Minnesota 55133-3427 (US)
(72) Inventor:
(74) Representative: Baillie, Iain Cameron

(56) References cited:
- EP-A- 0 098 535
- GB-A- 2 045 454
- US-A- 4 029 390
- US-A- 4 181 401
- US-A- 4 274 708

## Description

### Background of the Invention

### 1. Field of the Invention

This invention relates to optical fiber splicing devices for making butt splices between optical fibers and in particular to an improved optical fiber splice connector for making splices between two optical fibers and utilizing a single tool to complete one or more splices.

### 2. Description of the Prior Art

The art is becoming replete with devices for centering optical fibers for the purpose of aligning ends of optical fibers for splicing the ends of fibers for continued transmission of light rays along the fibers. The optical fiber used in the telecommunications industry is mostly a single mode glass fiber. This fiber typically contains a 8 µm ± 1 µm (micrometers) diameter central glass core through which the optical signal is transmitted. The core is surrounded by a glass cladding which has a diameter of 125 µm ± 3 µm. The cladding has a slightly different index of refraction than the core.

There are a number of prior art devices which have been designed to make permanent connections or splices in single mode glass fiber. To function properly and produce a low loss splice, these devices must align the core portions of the two fiber ends being spliced to within approximately 10% of their core diameter or less than 1 µm.

Some of the prior art devices attempt to achieve fiber end centering and alignment by forcing the fibers into a non-conformable "V" groove or between non-conformable rods. These devices function satisfactorily as long as the fibers being spliced are the same diameter. Examples of such devices are disclosed in U.S.A. Letters Patent No. 4,029,390; 4,274,708; and 4,729,619.

When the fibers to be spliced have diameters at opposite ends of the tolerance range (122 µm and 128 µm), the non conformable "V" groove type devices have difficulty providing the required core alignment precision.

Other prior art devices urge the two fiber center lines into alignment with one another by locating the fiber ends between three equally spaced ductile or elastomeric surfaces. These surfaces create an equilateral triangular cross-sectional channel into which the fibers are positioned. The junction between the fiber ends is located usually at the mid point of the channel. These devices provide better performance than the non-conformable "V" groove type devices because they are better able to accommodate differences in fiber diameters. Examples of these devices are found in United States Letters Patent Nos. 4,391,487; 4,435,038; and 4,593,971.

Another prior art patent is United States Letters Patent No. 4,339,172 which utilizes a foldable grip member that is placed within an elastomeric sleeve which affords compressive forces against the grip member to assert pressure on the grip member to grip each of the cables at a number of equally-spaced points around its periphery.

The device of the present invention utilizes three equally spaced contact surfaces which form a fiber centering channel as do other prior art devices, but the device contains easily definable functional and performance improvements over the prior art. These differences in structure and means of operation are discussed below.

The splicing element constitutive of the splice connector of the present invention provides high precision movable fiber contact surfaces and integral actuation structure affording such movement in a single easy to manufacture part. The fiber clamping surfaces are initially spaced far enough apart to allow fibers to be easily inserted into a channel or passageway until the end faces are in contact. This structure makes it easy to detect by tactile feedback and/or buckling in the opposing fiber when the first fiber is pushed against the opposing fiber in the passageway. When the fiber ends are in contact, the splice element is closed and the fiber ends are aligned and clamped. Other prior art devices such as the device of patent No. 4,391,487 and the commercial form sold by the assignee of patent No. 4,391,487 utilizes molded elastomer blocks for centering and aligning the fiber. These blocks contain an essentially triangular cross-sectional passageway which is slightly smaller than the diameter of the fibers. When the fibers are inserted into the molded passageway, they are required to force the elastomer surfaces open by elastically deforming the elastomer contact surfaces. This requires significant compressive force on the fiber to push it into the passageway. Because of this high insertion force, it is often difficult to tell when the fiber end faces are actually in contact inside the splice. Additionally, it is possible to easily break the fibers under compressive buckling as they are forced into the elastomeric centering blocks.

Only very small ductile or elastic deformation of the fiber locating surfaces is required in the splice element of the connector of the present invention to provide precise fiber centering and clamping. This deformation creates no external material flow parallel to the axis of the fiber and requires no ductile deformation of the hinged structure around the clamping surfaces. Other prior art devices such as the connector of patent No. 4,435,038 require extremely large deformations of the fiber clamp surfaces and surrounding structure to produce fiber centering and clamping. Unfortunately, these large deformations may result in unwanted distortion of and unequal clamp forces on the fiber engaging surfaces. This in turn may also produce shifting of the fiber center lines and for axial separation of the fiber end faces.

Forces high enough to embed the fiber uniformly into each of the clamping surfaces of the splicing element of the connector of the present invention by ductile deformation can be generated easily through the hinged lever structure afforded by the levers of the splicing element. A single small plastic case containing a sliding cap can easily produce forces large enough to move the hinged levers of the splicing element toward each other and clamp the fiber in the passageway. Other prior art devices such as the connector of patent No. 4,435,038 require large cumbersome crimping tools capable of producing very high localized forces to clamp the fibers in the splice structure.

Once clamped, the splicing element of the connector of the present invention maintains uniform compressive loads on the fibers which result in high fiber tensile load retention, and excellent thermal cycling stability. The fiber clamp forces are maintained by elastic energy stored in the levers of the splicing element as well as in the clamping structure. Other prior art devices such as the connector of patent No. 4,435,038 tend to relax or elastically recover slightly after removal of the splice crimping tool forces. This relaxation may result in a slight loosening of the fiber in the locating channel which can lead to reduced pull out forces as well as fiber end face separation during thermal cycling.

During the fiber centering and splicing process in the splicing element of the connector of the present invention, clamping loads are generated on the fiber. Since glass has very high compressive strength, these loads tend to embed the fibers slightly into the three ductile fiber supporting surfaces forming the fiber channel in the element. These clamping loads on the fiber cladding result in excellent tensile load retention capabilities and thermal cycling stability for the splice. In addition, the application of the clamping load is easily and quickly accomplished simply by squeezing together the levers of the splice element. Other prior art devices such as the fiber centering device of patent No. 4,391,487 require adhesives to bond the fiber to the external splice structure beyond the fiber centering blocks. These adhesives can be difficult to apply and to cure uniformly.

The splicing element of the connector of the present invention has also been designed to permit reuse. If it becomes necessary to remove fibers from or reposition fibers within the splice, the clamping force provided by the levers of the splicing element can be easily removed, and the elastic memory in the levers and hinge sections will cause the fiber locating and clamping surfaces to move apart or reopen. The clamping loads on the fibers are then released, and the fibers can be withdrawn, rotated or repositioned. Other prior art devices such as the connectors of patent Nos. 4,391,487 and 4,435,038 are permanently crimped or adhesively bonded and cannot be reused. The splice element is mounted in a housing that receives the ends of the fibers to be spliced and contains chamfered openings that direct the fibers into the element. A cap portion of the connector fits over the splice element and into the housing to cam the levers of the splice element closed to complete the splice.

### Summary of the Invention

According to the present invention there is provided a splice connector for making butt splices between two optical fibers comprising:
a splice element formed of a longitudinally foldable sheet of deformable material, said sheet comprising three longitudinal generally planar fiber supporting surfaces which collectively define therebetween, when said sheet is in said longitudinally folded state, a longitudinal optical fiber passageway of generally triangular cross-section for receiving therein two fiber ends in abutting relationship to be spliced together, said sheet extending in the lateral direction beyond the fiber supporting surfaces so as to form two lever portions which may be urged together so as to cause at least one of said surfaces of the formed fiber passageway to be moved to constrict the passageway and each fiber supporting surface to deform uniformly around end portions of inserted optical fibers to clamp said fiber end portions;
a body member of generally parallellepipedic configuration having a bottom surface, a top surface opposed side surfaces and end surfaces, and further having an open longitudinal cavity formed into said top surface for receiving said splice element in its longitudinally folded state and with said lever portions directed toward the top surface, and aligned openings in said end surfaces communicating with said longitudinal cavity for directing the optical fibers to be spliced into the fiber passageway of the thus received splice element; and
a cover for closing the open cavity of the body member whilst simultaneously causing the clamping of the fibers inserted in the splice element received therein, said sliding cover comprising a longitudinal lid provided with a pair of downwardly extending and mutually diverging longitudinal cam bars, and said cover being adapted to be firstly retained onto the body member before the closing thereof, with its pair of cam bars in the longitudinal cavity for receiving the two lever portions of said splice element therebetween, and to be then moved in its closing and clamping position with said pair of cam bars sliding towards the cavity bottom to cam said lever portions of the splice element towards each other to bring said fiber supporting surfaces against the optical fiber end portions disposed in said passageway for aligning and clamping said end portions in axially aligned abutting relationships.

A connector for making butt splices between two optical fibers in accordance with the present invention is thus self contained. The splice element in a preferred embodiment comprises a rib having a first support surface for a fiber and a pair of levers having fiber supporting surfaces which levers are pivoted in relationship to said rib to force said supporting surfaces against optical fiber ends disposed therebetween and align their axes.

The splice element more specifically in an embodiment comprises a folded sheet formed in one surface with two parallel grooves having converging walls which define, therebetween, a rib having a fiber supporting surface. The other walls of the grooves are separated at their base portions from the converging walls by land areas at which the sheet is folded. The other walls extend from the land areas at which the sheet is folded to the one surface of the sheet in which the grooves are formed and define two additional fiber supporting surfaces which together with the fiber supporting surface of the rib form a passage for receiving an optical fiber when the sheet is folded. The sheet has edge portions which diverge from each other and extend past the passageway to define the pair of levers which are used to drive the fiber supporting surfaces together. These levers are cammed toward each other to reduce the size of the passageway and bring the fiber supporting surfaces against circumferentially spaced areas of the optical fibers for aligning their axes. The levers are urged together and held in fiber clamping position by closing the cap onto the base.

The splicing element is preferably made of a material having an elastic yield strength sufficient to clamp the fiber supporting surfaces against a fiber and ductile enough to embed the fibers into the supporting surfaces. A preferred material is aluminum which is ductile at stress levels above 41 to 55 MPa (Mega Pascals) (6 to 8 ksi) but elastic at lower stress levels to afford sufficient elasticity to maintain a continual compressive force on the optical fibers once the levers have been brought together.

The base in the splice connector provides means for supporting the deformable metal splicing element and has openings for directing the ends of optical fibers to be connected into the element. Cover means are provided to urge the edge portions of the splice element together to hold the same resiliently against the optical fibers. The squeezing of the levers is afforded by parallel transversely spaced cam bars on the sides of the cover which receive the levers of the splicing element therebetween and bring the fiber supporting areas against the optical fibers or more generally against the cladding on the optical fibers with sufficient force that the three surfaces are deformed by the fiber. Should the two fibers differ in outside diameter the deformation of the surfaces may vary due to the two sizes of fibers but the surfaces will be deformed by both fibers to align the axes of the two fibers.

The connector is preferably reopenable and is provided with means for retaining the element in the base which are separate from the cap so the cap can be lifted back to its original open position without raising the element from the base.

### Brief Description of the Drawing

The present invention will be further described with reference to the accompanying drawing, wherein:
Figure 1 is a plan view of a sheet forming one embodiment of a splice element used in an embodiment of a splice connector according to the invention;
Figure 2 is an end view of the sheet of Figure 1;
Figure 3 is a side view of the splice element after the sheet has been folded;
Figure 4 is an end view of the splice element ready to accept an optical fiber;
Figure 5 is an enlarged fragmentary cross-sectional view of the sheet of Figure 1;
Figure 6 is an end view of a splice element with an optical fiber disposed in the closed element;
Figure 7 is an exploded perspective view of the splice connector of the present invention incorporating the splice element of Figures 1 through 5;
Figure 8 is a plan view of the connector of Figure 7;
Figure 9 is a front elevational view of the splice connector of Figure 8, partly in section to show interior portions;
Figure 10 is a sectional view taken along the line 10 - 10 of Figure 9;
Figure 11 is a sectional view taken along the line 11 - 11 of Figure 9;
Figure 12 is an exploded perspective view of another embodiment of a splice connector of the present invention;
Figure 13 is a plan view of the connector of Figure 12;
Figure 14 is a front elevational view of the connector of Figure 13, partly in section to show interior parts;
Figure 15 is an end view of the connector of Figure 14;
Figure 16 is a vertical sectional view of a splice connector for multiple fibers incorporating the deformable splice element of Figures 1 through 5;
Figure 17 is a cross-sectional view of the connector of Figure 16 taken along the line 17 - 17; and
Figure 18 is a vertical sectional view of a second embodiment of a splice connector for multiple fibers of a buffer tube or cable.

### Description of the Preferred Embodiment

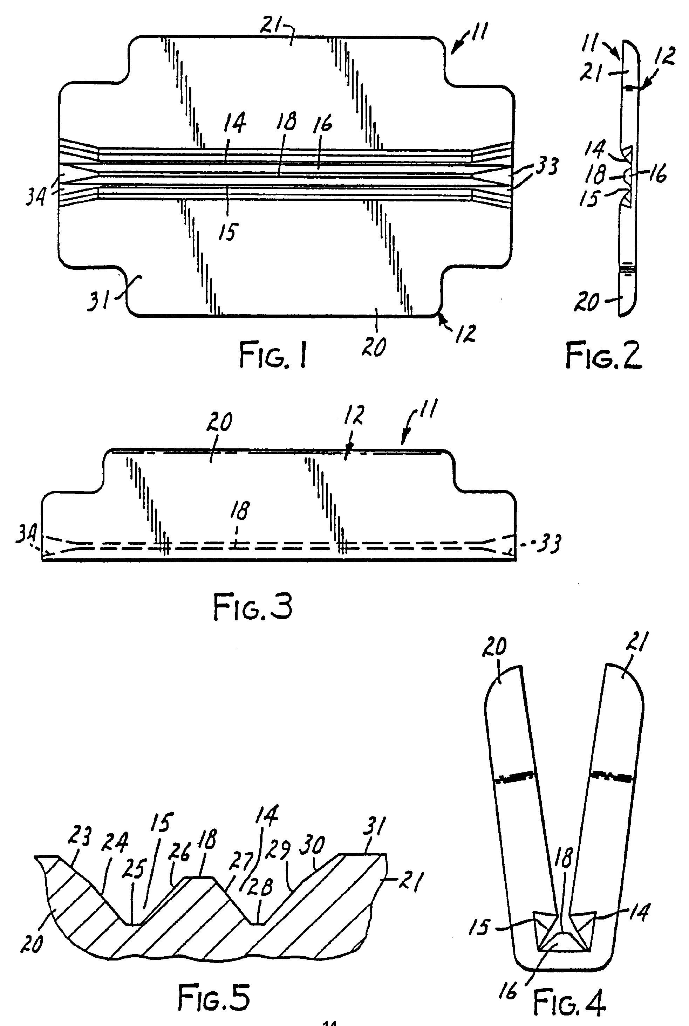

The present invention will be described with reference to, the accompanying drawing wherein Figures 1 through 6 illustrate a novel ductile deformable splice element, generally designated 11, for use in an optical fiber connector of various forms according to the present invention as herein described. The splice element is formed from a sheet 12 of a deformable elastic material. The sheet 12 has a pair of parallel grooves 14 and 15 formed generally centrally thereof which grooves define therebetween a rib 16 having an optical fiber supporting surface 18. The sheet 12 has levers 20 and 21 on either side of the grooves 14 and 15 which levers serve as means for drawing the fiber supporting surfaces on the sheet toward each other to align the axes of fibers positioned in a passageway defined by the supporting surface 18 and two additional surfaces by affording deforming compressive engagement therewith.

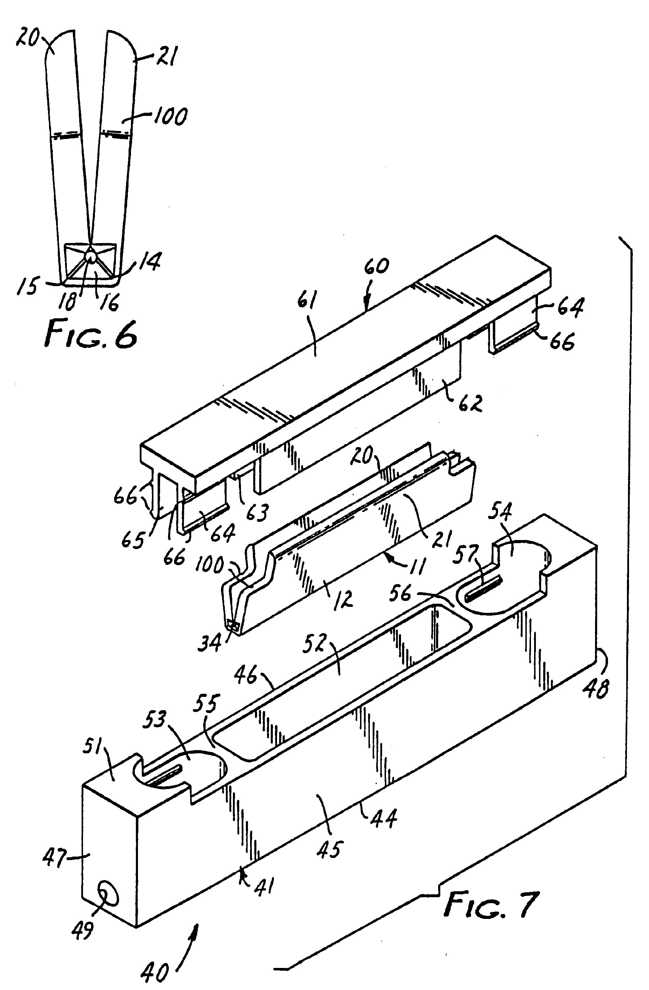

Referring now to Figure 5 there is shown in enlarged scale the shape of the grooves 14 and 15. The sheet is stamped, coined or molded to provide preferably nine surfaces formed in the face or surface 31 of the sheet 12. The surface 23 is disposed at an angle of 55° to a vertical line or line perpendicular to the face of the sheet to form one optical fiber supporting surface, surface 24 is disposed at an angle of 42.5° to the vertical and together with surface 23 form one wall of the groove 15. The base of the groove 15 is defined by a land area 25 along which the sheet 12 is folded to form the pivot line for the side portion 20 to move surface 24 near a surface 26 forming a wall of the groove 15 and one side of the rib 16. The rib 16 has the surface 18 defining a support surface and the other wall or surface defining the rib is surface 27. The base of the groove 14 has a land area 28 joined to wall 27 and a first part or surface 29, corresponding to surface 24, and surface 30 corresponding to surface 23, forming the other wall of groove 14. Surfaces 26 and 27 are disposed at an angle of 42.5° to the vertical line. The surface 18 is recessed from the primary surface 31 of the sheet 12 sufficiently that when the sheet 12 is folded at the land areas 25 and 28 to dispose the levers 20 and 21 at 15 to 20° apart, the surfaces 23, 18 and 30 will be disposed to form a passageway to accept the desired sized fiber easily and engage the surface of a cylindrical fiber placed within the passageway at locations approximately 120° apart. This is generally illustrated in Figure 6. Surfaces 18, 23, 24, 25, 26, 27, 28, 29, and 30 may also be curved slightly transversely about an axis instead of being planes but straight longitudinally. The only restriction on the surface geometry is that the 3 contact surfaces 23, 18, and 30 produce a channel with lines of contact spaced at approximately 120° internals around the circumference of the fiber to engage the fibers substantially uniformly along the length of the fiber ends in the element.

The sheet 12 is provided with bevelled, flattened or flared surfaces 33 and 34 at opposite ends of the rib 16 and walls of the grooves 14 and 15. These flattened areas 33 and 34 define funnel like entrance areas into the passageway defined by the surfaces 23, 18 and 30 of the splice element. The sheet 12 is preferably formed of a metal, such as an aluminum sheet of 0.5 mm (0.020 inch) thick alloy 3003 with a temper of 0. The hardness of the material can be between 23 and 32 on the Brinnell scale (BHN) and the tensile yield strength can be between 35 to 115 MPa (Mega pascals) (5 to 17 ksi). Another alloy is 1100 with a temper of 0, H14 or H-15 and a tensile yield strength and a hardness within the ranges recited above. Both alloys provide a material which is softer than the glass of the optical fiber and the cladding but ductile under the clamping pressures applied to the optical fibers. Such deformation is sufficient that the surfaces 23, 18 and 30 conform to the optical fibers contacted and should one fiber be larger than another, the surfaces will deform sufficiently to clamp onto both fiber ends and be deformed even by the smallest of the two fibers. Thus, the splice element 11 will center the core portions of the optical fibers in aligned position such that 90% or better of the core positions will be aligned. The material of the sheet 12 is also resilient such that the elastic limit of the material in the hinge areas and levers is not exceeded when the sheet is folded to contact a fiber therein. The elasticity of the material is such that the levers 20 and 21 will maintain a compressive force on the optical fiber after the splice is made to restrict the fibers from pulling out or the centers of the fibers from shifting from their position of alignment with each other. This continued spring compression also restricts changes in the performance of the splice with changes in temperature. The reserve forces of this spring compression are always present when the splice has been completed.

The fibers are retained in the element such that the pull-out force will exceed the tensile strength of the glass fiber.

In a preferred example, the surface 18 has a width of 0.152 mm (.0060 inch) and is recessed 0.109 mm (0.00433 inch) from the surface 31. From the center line through the rib 16 to the base of surfaces 26 or 27 is 0.317 mm (0.0125 inch), the width of surfaces 25 and 28 is 0.0838 mm (0.0033 inch). The distance from the center line through the rib 16 to the junction between surfaces 23 and 24 is 0.582 mm (0.0229 inch) and from the center line to the junction between surfaces 23 and 31 is 0.833 mm (0.0328 inch). The sheet 12 is normally 17.78 mm (0.7 inch) long by 7.62 mm (0.3 inch) wide along the major edges.

In tests, twenty sample elements were made using the geometry and dimensions defined above. Ten elements were made from 1100 series aluminum of 0 temper and ten samples were made in 1100 series aluminum of H15 temper. The same single mode fiber was used in making the splices in all sample elements. The average insertion loss for the H15 temper samples was approximately 0.10 db and for the 0 temper samples it was approximately 0.15 db. In thermal cycling tests where the elements were subjected to 78°C for one hour, room temperature for one hour, one hour at -40°C, one hour back at room temperature, etc., showed a variation of less than 0.1 db loss over two weeks using known equipment for measuring insertion loss.

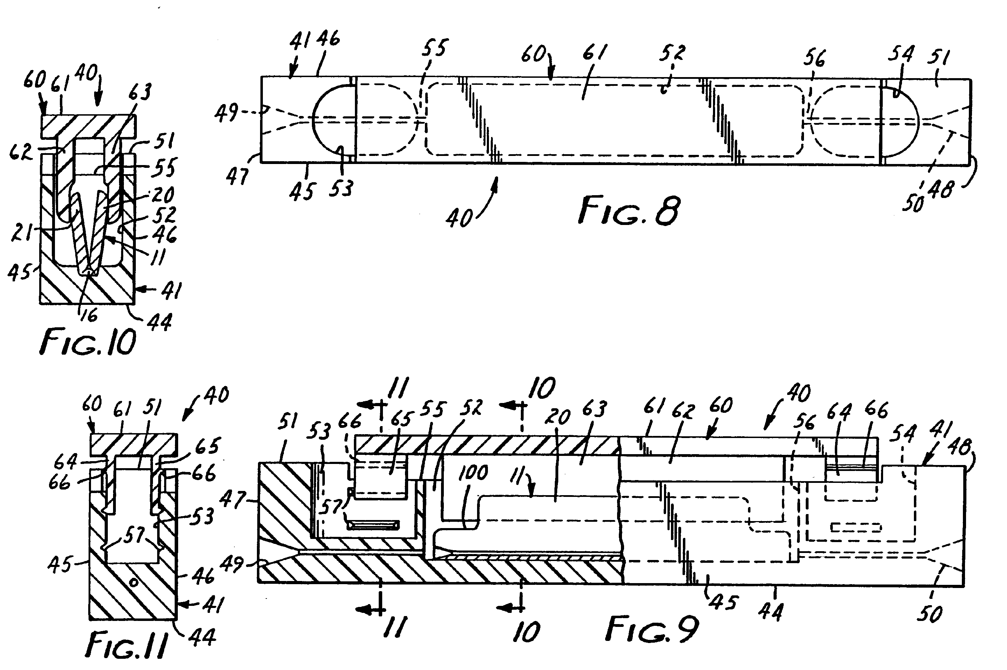

Figure 7 shows one embodiment of an optical fiber connector constructed according to the present invention, which connector is generally designated 40 and comprisesa body member 41, the splice element 11 and a cover 60. The member 41 and cover 60 are formed of a rigid high temperature stable plastic material. The member 41 is a generally box like member with a recess in one wall, forming a splice element receiving cavity, and chamfered fiber receiving openings in each end communicating with the recess to direct fibers into the element 11. The body member illustrated in Figures 7, 8, 9, 10, and 11 comprises a bottom wall 44, transversely spaced side walls 45 and 46, end walls 47 and 48, formed with the optical fiber receiving openings 49 and 50, and a top wall 51, recessed with a central elongate element receiving recess 52 and two end recesses 53 and 54. The recesses 53 and 54 are separated from the recess 52 by wall members 55 and 56 respectively and are not cut into the block as deeply as the central recess 52. The inside opposed surfaces of the walls of the recesses 53 and 54 are formed with one or more shoulders 57 forming catches which cooperate with detent means on the cap 60 to retain it in place.

The cover 60 affords means for engaging the levers 20, 21 of the splicing element 11 and for urging the same toward each other uniformly to secure the ends of optical fibers in the element in an aligned light transmitting relationship with each other. The cover 60 comprises a top pressure receiving lid 61 having on one surface a pair of parallel transversely spaced longitudinal cam bars 62 and 63 and a pair of detent means 64, 65 which cooperate with the shoulders 57 in the recesses 53 and 54 to lock the cover 60 initially in a cover retaining position or set position and secondly in a cover locked position with the splicing element 11 closed onto the fibers. The detent means illustrated include a pair of transversely spaced walls 64 and 65 depending from the surface of the lid 61 opposite the pressure receiving surface and adjacent each end of the lid 61. The walls 64 and 65 are positioned to have an interference fit with the recesses 53 and 54 and have detents 66 on their outer facing surfaces cooperating with the shoulders 57 such that when the cover 60 is placed on the base 40 it is retained against displacement and when forced into the body member to place the bars 62 and 63 deeply into the recess 52 the detents 66 lock the cover in the splice forming position.

The splice element 11 normally has a gel disposed in the area of the fiber receiving passageway which has index of refraction matching characteristics to glass to improve the continuity of the transmission through the splice.

When the connector is assembled as shown in Figures 8 through 11 the element 11 is disposed in the recess 52 and held in a fiber receiving position by the cover 60 retained on the body member in a set position. The chamfered openings 49 and 50 extend in from the end walls 47 and 48, beneath the bottom walls of the recesses 53 and 54, in aligned position with the fiber passageway of the element 11. When the free ends of two fibers to be spliced are positioned in the connector, one into each opening 49, 50 to meet at approximately the center of the element passageway, a closing force is applied against the lid 61 of the cover and against the bottom wall 44 of the body member to drive the cam bars 62 and 63 over the levers 20 and 21 of the splicing element 11 to urge or cam the fiber supporting surfaces 23, 18 and 30 onto the fiber ends for centering the fibers and making the splice therebetween.

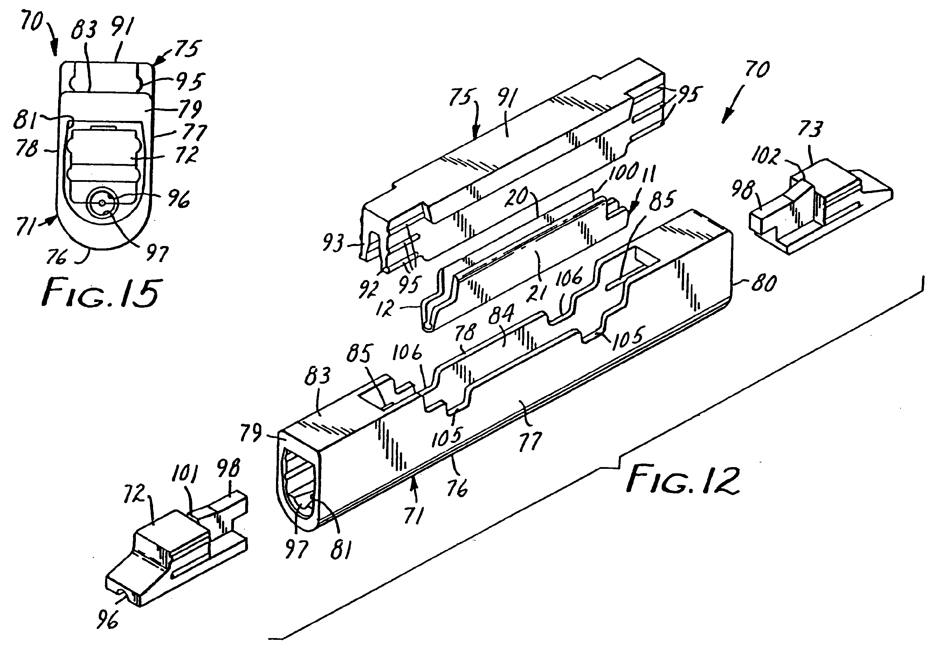

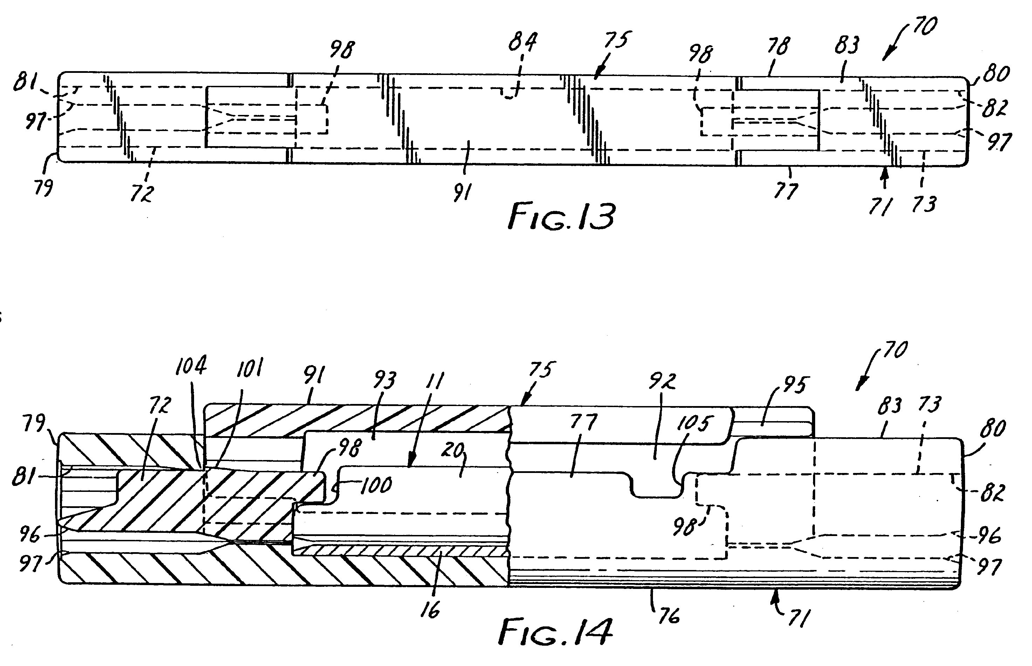

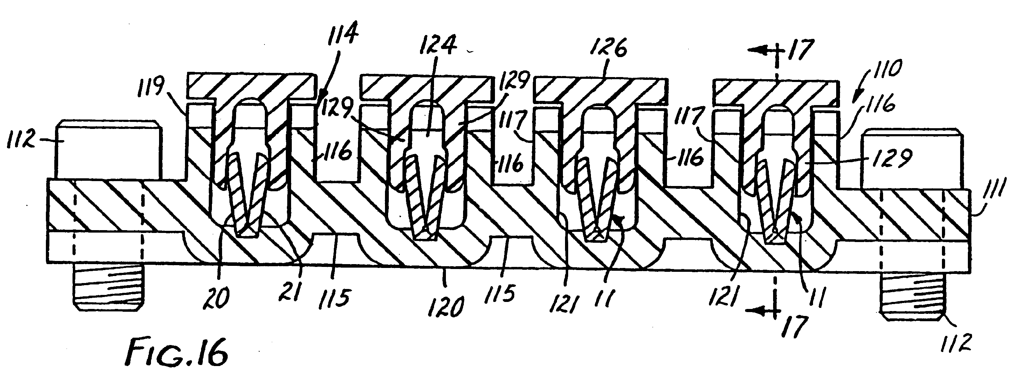

Figures 12, 13, 14 and 15 disclose a further embodiment of the optical fiber connector of the present invention. This connector, generally designated 70, is adapted to form a splice between two optical fibers, but it provides a connector which can also be reopened to allow removal of the fiber ends if it is desired to open the splice for any reason.

The connector 70 comprises a body member 71, the splice element 11, two end inserts 72 and 73, and a cover 75. The member 71 is formed of a rigid polymeric material and is a generally box-like member with a recess in one wall, forming an element receiving cavity, and insert receiving openings in each end communicating with said recess to position therein two inserts which, with the base, define two fiber receiving passages for directing the optical fibers into the element 11. The body member illustrated in Figures 12, 13, 14 and 15 comprises a bottom wall 76, transversely spaced side walls 77 and 78, end walls 79 and 80, formed with the insert receiving openings 81 and 82, and a top wall 83, recessed with a central elongate element receiving recess 84. The side walls 77 and 78 are recessed to receive the sides of cover 75. The insert receiving openings 81 and 82 communicate with the recess 84 to allow the insertion of the end inserts 72 and 73 to a locking position with the splicing element 11 as will be hereinafter explained. The inside opposed surfaces of the walls 77 and 78 defining the ends of the recess 84 are formed with one or more shoulders 85 forming catches which cooperate with detents on the cap 75 to retain it in place.

The cover 75 affords means for engaging the levers 20 and 21 of the splicing element 11 and for urging the same toward each other uniformly to secure the ends of optical fibers in the element into an aligned position with each other. The cover 75 comprises a top pressure receiving lid 91 having on one surface a pair of transversely spaced cam bars 92 and 93 having opposed inner diverging surfaces and extended ends. The extended ends of the pair of bars 92 and 93 are formed with detent means which cooperate with the shoulders 85 in the recess 84 to position the cover 75 initially in a cover retaining position or set position and secondly in a cover locked position with the splicing element 11 closed onto the fibers. The detent means illustrated include protruding detents 95 positioned to have an interference fit with the inside surfaces of the walls 77 and 78, and particularly with the shoulders 85, such that when the cover 90 is placed on the base 71 it is retained against displacement and when forced into the base to place the bars 92 and 93 into the recess 84 between the side walls 77 and 78 the detents lock the cover in the splice forming position. The cover 75 is also provided with projecting sides on the bars 92 and 93 to be received in recessed areas along the upper sides of the side walls 77 and 78.

The end inserts 72 and 73, as illustrated in Figures 12, 13 and 14, are formed for insertion into the openings 81 and 82 of the body member. The inserts are formed on their lower surface with semicircular grooves 96 which cooperate with semicircular grooved surfaces 97 formed in the lower part of the openings 81 and 82 to define fiber receiving passages. The passages so formed cooperate and are aligned with the passageway in the splicing element 11 to guide optical fibers into the element. The end inserts 72 and 73 also have tongues 98 which extend into the element receiving cavity 84 to a position for retaining the element 11 in the cavity. The notches 100 in the corners of the sheet 12 defining the element 11, see Figure 1, afford a recess to receive the tongues 98 of the end inserts affording the interference between the parts to retain the element 11 in the body member. The tongues 98 are positioned inside and below the ends of the cover 75 and the associated detent means, but do not interfere with the bars 92 and 93 moving over the levers 20 and 21 to close the element onto the fibers.

Formed on the end inserts 72 and 73 are also detents 101 and 102 for retaining the inserts 72 and 73 in the base. The detents 101 and 102 are positioned between the body of the insert and the tongues 98. The detents 101 and 102 engage shoulders 104 formed at the position on the top wall 83 where the openings 81 and 82 intersect the cavity 84. With the inserts 72 and 73 in place the detents 101 and 102 and shoulders 104 hold them from displacement. The end inserts 72 and 73 will thus hold the splicing element 11 from being displaced by the bars 92 and 93 if it is later desired to lift the cover 75 off of the base, even after making a splice. The cover 75 may be lifted back to its original set position by forcing it to became released from the detents urging a locking engagement with the base. Notches 105 and 106 are formed in the recessed areas of the side walls 77 and 78 respectively to provide spaces between the projecting sides of the bars 92 and 93 on the cap and the body member for insertion of jaws of a removal tool to lift the cap back to its original set position before splicing from the base.

When the splice connector 70 is assembled as shown in Figures 12 through 15, the element 11 is disposed in the recess 64 and held in a fiber receiving position by the cap 75 retained on the base 71 in a set position and by the end inserts 72 and 73. When the free ends of two fibers to be spliced are inserted into the passages formed between the end inserts and the body member and are positioned in the connector element 11 to approximately the center of the element passageway, a closing force is applied against the cover 75 and against the bottom wall 76 of the body member to drive the cam bars 92 and 93 over the levers 20 and 21 of the splicing element 11 to close the fiber supporting surfaces 23, 18 and 30 onto the fiber ends making the splice therebetween.

The splice connectors thus described provide connectors which are readily usable in the field to make butt splices between optical fibers by applying sufficient force against the cap to close the same onto the base. The parts are formed to fit together such that the closing force is applied generally uniformly along the levers of the splicing element to engage the optical fiber ends and emboss the surfaces 23, 18 and 30 by the fibers to center and retain the fibers in their proper aligned positions.

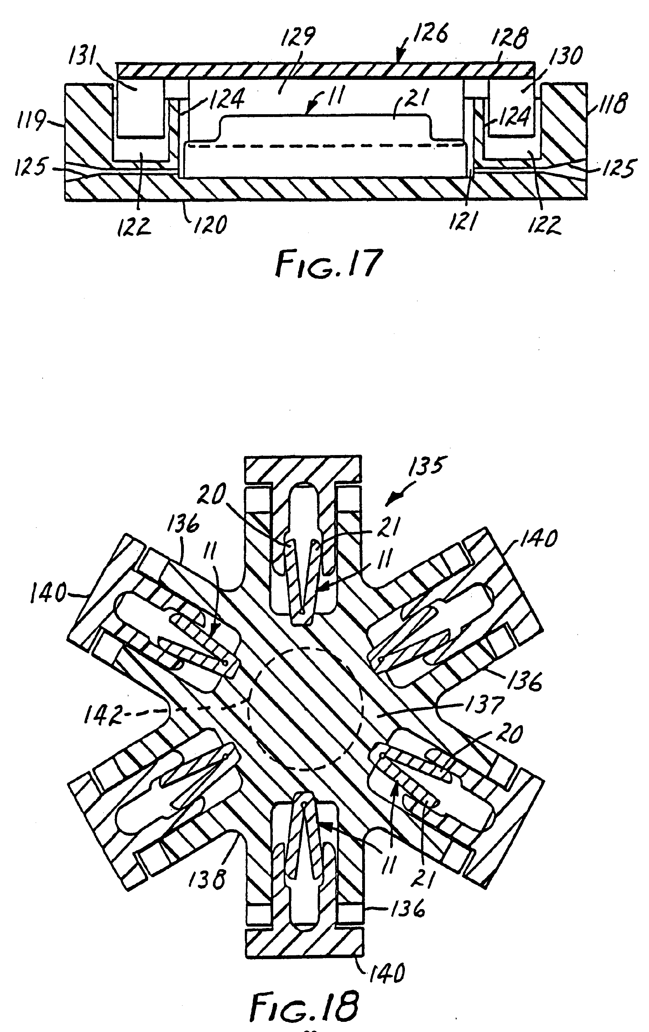

Referring now to Figures 16 and 17, there is illustrated a cable splice connector for forming butt splices between a plurality of optical fibers. The connector, generally designated 110, comprises a molded body 111 adapted to be removably mounted to a tray or frame by fastening members 112 extending through hole means in the molded body. The body member 111 is rectangular and comprises a plurality of spaced parallely positioned modules or oblong sockets 114 joined by webs 115. The sockets 114 each comprise side walls 116 and 117, and end walls 118 and 119, joined by a bottom wall 120. The side walls 116 and 117 are generally parallel and the end walls are positioned generally in a plane with the end walls of the other sockets. The walls of the sockets 114 are formed to define an elongate splice element receiving recess 121. The bottom of the recess 121 is shaped to receive the folded end of an element 11. A recess 122 is formed adjacent each end of the boss 114 and is separated from the recess 121 by a transverse septum 124. The end walls 118 and 119 are each provided with an optical fiber receiving opening 125 communicating with the recess 121. The openings 125 preferably are chamfered at the end wall to aid in threading a fiber into the opening 125. The openings 125 extend beneath the recesses 122 as shown in Figure 17. The recesses 122 cooperate to define detent means for retaining a cover 126 on each of said sockets 114.

The cover 126 comprises a top wall 128 which is as wide as the socket 114 and fits between the end walls 118 and 119 which project above the side walls 116 and 117. The top 128 has a pair of spaced parallel cam bars 129 depending from the inside surface of the top to fit within the side walls 116 and 117. The bars 129 are spaced from each other sufficiently to receive the levers 20 and 21 of the splicing element 11 therebetween and to cam the same toward each other sufficiently to clamp a pair of fiber ends in the element, as described above. Detent means are provided to secure the cover 126 onto the socket in a first set position to retain the cover on the socket 114 and in a second closed position completing the splice. The detent means illustrated comprise a pair of spaced projections 130 and 131 positioned adjacent each end of the top 128 which fit into the recesses 122. The projections 130 and 131 each comprise two spaced panels, each having an interference fit with side walls 116 and 117. The walls and panels are provided with opposed detents, recesses, shoulders, or the like to mechanically retain, permanently or removably, the cover 126 in place on the socket. Each socket 114 has a separate cover 126 as described to individually make the butt splices between the optical fibers.

A supporting rib 132 is provided on one side of the molded body 111. The rib 132 strengthens the housing and extends around the openings through the body for the fasteners 112 to form a reinforcing boss. The rib can extend along each edge of the body 111 and connect to bosses around each of four openings for fasteners 112. The openings are formed in mounting flanges 132 extending beyond the end sockets 114 of the plurality of sockets.

The actual number of sockets 114 on a molded body 111 will depend on the application of the connector.

The connector 135 illustrated in Figure 18 corresponds generally to the connector of Figures 16 and 17, with the basic difference being the sockets, illustrated generally as 136, are positioned on a support 138 in a radial array. The sockets 136 extend parallel to a common axis and the longitudinal axes of the sockets are parallel. The support 138 is molded to form a hub 137 around which a plurality of sockets 136 are positioned. The walls of the sockets are formed integrally with the hub. A splice element 11 is positioned in a recess in the socket 136 and a cover 140 is positioned above each recess to clamp the splice element onto the ends of optical fibers threaded into the openings at the ends of the sockets. The covers 140 are similar to the covers 126 and include the cam bars for closing the splicing element onto the fibers and the detent means for securing the cover to the socket.

The connector 135 can be divided diametrically or along two radii or along a chord to reduce the number of modules or sockets 136 on the connector. Thus the remaining modules are arranged in an arcuate array of two, three, etc., sockets.

The hub 137 is provided with a recessed area 142 to reduce the material in the hub. This recess may also support the connector 135 on a rod or be provided with a fastener through a center axially extending hole which splices the strength member of the buffer tubes or cables.

The sockets 114 and 136 can be constructed to have inserts which fit into openings in the end walls of the sockets for the purpose of forming the openings through which the fibers are guided into the deformable metal splicing element and to retain the splicing element 11 in place. Such alternative structure for the sockets 114 and 136 is illustrated in Figures 12, 13, 14, and 15.

The connector of this invention provides a connector for use in connecting the optical fibers of a buffer tube or of a cable and readily organizes the splices. The molded bodies, supports, body members, covers and end inserts of the splice connectors are preferably molded from a glass loaded polymeric formulation identified as Vectra A130 available from Engineering Plastics Division of Hoechst Celanese Corporation of Chathan, New Jersey, U.S.A. This material has a high heat deflection temperature and will not cold flow under the pressures applied by the levers 20 and 21.

## Claims

1. A splice connector for making butt splices between two optical fibers comprising:
a splice element (11) formed of a longitudinally foldable sheet of deformable material, said sheet comprising three longitudinal generally planar fiber supporting surfaces (18, 23, 30) which collectively define therebetween, when said sheet is in said longitudinally folded state, a longitudinal optical fiber passageway of generally triangular cross-section for receiving therein two fiber ends in abutting relationship to be spliced together, said sheet extending in the lateral direction beyond the fiber supporting surfaces so as to form two lever portions (20, 21) which may be urged together so as to cause at least one of said surfaces of the formed fiber passageway to be moved to constrict the passageway and each fiber supporting surface to deform uniformly around end portions of inserted optical fibers to clamp said fiber end portions;
a body member (41; 71) of generally parallellepipedic configuration having a bottom surface, a top surface (61; 91) opposed side surfaces and end surfaces, and further having an open longitudinal cavity (52; 84) formed into said top surface for receiving said splice element in its longitudinally folded state and with said lever portions (20,21) directed toward the top surface, and aligned openings (49, 50; 81, 82) in said end surfaces communicating with said longitudinal cavity for directing the optical fibers to be spliced into the fiber passageway of the thus received splice element; and
a cover (60; 75) for closing the open cavity of the body member whilst simultaneously causing the clamping of the fibers inserted in the splice element received therein, said sliding cover comprising a longitudinal lid (61, 91) provided with a pair of downwardly extending and mutually diverging longitudinal cam bars (62, 63; 92, 93), and said cover being adapted to be firstly retained onto the body member before the closing thereof, with its pair of cam bars in the longitudinal cavity for receiving the two lever portions of said splice element therebetween, and to be then moved in its closing and clamping position with said pair of cam bars sliding towards the cavity bottom to cam said lever portions of the splice element towards each other to bring said fiber supporting surfaces against the optical fiber end portions disposed in said passageway for aligning and clamping said end portions in axially aligned abutting relationships.

2. A connector according to claim 1 wherein said sheet of deformable material has opposite surfaces and longitudinal sides, a pair of parallel grooves (14, 15) being formed in one surface to define a pair of fold lines, two of the walls defining said grooves having equal converging sides (26, 27) and forming a central rib (16) defining a first of said three elongate fiber supporting surfaces (18), the other two side walls (24, 29) forming the grooves being separated at their base portions from said two of the walls by land areas (25, 28) at which said sheet is folded, and said other two side walls extending from said land areas to said one surface (31) of said sheet and including surface areas (23, 30) defining the two other of said three elongate fiber supporting surfaces adjacent said pair of lever portions (20, 21) which two other supporting surfaces are disposed in an angular relationship to each other and with said first elongate fiber supporting surface on said rib.

3. A connector according to claim 1 or 2 wherein said sheet is formed of a material having sufficient elastic yield strength to permit the lever portions to clamp said fiber supporting surfaces against said fiber ends to embed said fiber ends into said fiber supporting surfaces (18, 23, 30).

4. A connector according to claim 1 or 2 wherein said material is metal.

5. A connector according to claim 4 wherein said sheet is formed of an aluminum alloy having an elastic yield strength of between 35 and 115 MPa.

6. A connector according to claim 3 wherein said sheet is formed of aluminum and the sheet is about 0.5 mm thick.

7. A connector according to claim 6 wherein said aluminum sheet is aluminum alloy 3003.

8. A connector according to claim 7 wherein said aluminum has a 0 temper.

9. A connector according to claim 6 wherein said aluminum is alloy 1100 having a 0 temper.

10. A connector according to claim 1, 2, 3, 4, 5 or 6 wherein said connector further comprises means (72, 73) disposed in said openings (81) in the end surfaces of said body member 71 for retaining said splice element (11) and for defining chamfered holes for guiding an end of a said optical fiber into said splice element (11).

11. A connector according to any one of claims 1-9 wherein said connector further comprises detent means (57, 64-66) for retaining said cover (60) in a first position on said body member (41) and a second position closing said cavity (52) and completing a splice.

12. A connector according to any one of claims 1-9 wherein said connector comprises detent means (57) for respectively maintaining said cover in its retaining position on said body member and in its closing and clamping position closing said cavity, and said cover and body member have cooperating areas (105, 106) for insertion of a tool to lift the cover from its closed position on said body member.

13. A connector according to claim 1 wherein said connector further comprises a support (111, 136), a plurality of said body members (114, 136) disposed on said support and a cover (126, 140) and a splicing member for each said body member.

14. A connector according to claim 13 wherein said plurality of body members (114) are arranged generally planar with side walls parallel and end walls disposed in substantially the same plane.

15. A connector according to claim 13 wherein said plurality of body members (136) are arranged in an arcuate array.

16. A connector according to claim 13 wherein said plurality of body members (136) are arranged in a radial array.

## Patentansprüche

1. Spleißverbinder zur Herstellung stumpfer Spleißverbindungen zwischen zwei optischen Fasern, umfassend:
ein Spleißelement (11), das aus einer in Längsrichtung faltbaren Folie aus einem verformbaren Material besteht, wobei die Folie drei längliche, im allgemeinen ebene Faserauflageflächen (18, 23, 30) umfaßt, die im längsgefalteten Zustand der Folie zusammen zwischen sich einen länglichen Kanal für die optische Faser von im allgemeinen dreieckigem Querschnitt bilden, in dem zwei zu verspleißende Faserenden stumpf aneinanderstoßend aufgenommen werden, wobei die Folie in seitlicher Richtung über die Faserauflageflächen hinausragt, so daß zwei Hebelabschnitte (20, 21) gebildet werden, die zusammengedrückt werden können, damit wenigstens eine der Flächen des hergestellten Faserkanals bewegt werden kann, um den Kanal zu verengen, und damit sich jede Faserauflagefläche gleichmäßig um Endabschnitte der eingesetzten optischen Fasern herum verformt, so daß die Faserendabschnitte eingeklemmt werden;
ein Körperelement (41; 71) von im allgemeinen quaderförmiger Konfiguration mit einer Unterseite, einer Oberseite (61; 91), gegenüberliegenden Seitenflächen und Stirnflächen, und des weiteren mit einem langgestreckten offenen Hohlraum (52; 84), der in der Oberseite ausgebildet ist, um das Spleißelement in seinem längsgefalteten Zustand aufzunehmen, wobei die Hebelabschnitte (20, 21) zur Oberseite gerichtet sind, und mit zueinander ausgerichteten Öffnungen (49, 50; 81, 82) in den Stirnflächen, die mit dem langgestreckten Hohlraum in Verbindung stehen, um die zu verspleißenden optischen Fasern in den Faserkanal des so erhaltenen Spleißelements zu führen; und
eine Abdeckung (60; 75) zum Verschließen des offenen Hohlraums des Körperelements, während gleichzeitig die in das darin befindliche Spleißelement eingesetzten Fasern festgeklemmt werden, wobei die verschiebliche Abdeckung einen länglichen Deckel (61, 91) umfaßt, der mit einem Paar nach unten ragender und auseinander divergierender länglicher Nockenstangen (62, 63; 92, 93) versehen ist, und wobei die Abdeckung zunächst auf dem Körperelement festgehalten werden kann, bevor dieses verschlossen wird, wobei sich das Paar Nockenstangen in dem langgestreckten Hohlraum befindet, um zwischen sich die beiden Hebelabschnitte des Spleißelements aufzunehmen, und wobei die Abdeckung dann in die Schließ- und Klemmposition bewegt wird, wo sich das Paar Nockenstangen in Richtung zur Unterseite des Hohlraums bewegt, um die Hebelabschnitte des Spleißelements miteinander in Eingriff zu bringen, um die Faserauflageflächen gegen die in dem Kanal angeordneten Endabschnitte der optischen Faser zu drücken, so daß die Endabschnitte axial und stumpf zueinander ausgerichtet und festgeklemmt werden.

2. Verbinder nach Anspruch 1, bei dem die Folie aus verformbarem Material einander entgegengesetzte Flächen und Längsseiten besitzt, wobei ein Paar paralleler Furchen (14, 15) in einer Fläche ausgebildet ist, um ein Paar Falzlinien zu bilden, wobei zwei der die Furchen begrenzenden Wände gleiche konvergierende Seiten (26, 27) besitzen und eine mittige Rippe (16) bilden, die eine erste der drei langgestreckten Faserauflageflächen (18) begrenzt, wobei die beiden anderen die Furchen bildenden Seitenwände (24, 29) an ihrem Basisabschnitt von den beiden Wänden durch Stegbereiche (25, 28) getrennt sind, an denen die Folie gefaltet wird, und wobei die beiden anderen Seitenwände sich von den Stegbereichen zu der einen Fläche (31) der Folie erstrecken und Flächenbereiche (23, 30) umfassen, die die beiden anderen der drei langgestreckten Faserauflageflächen im Bereich der beiden Hebelabschnitte (20, 21) begrenzen, wobei die beiden anderen Auflageflächen im Winkel zueinander angeordnet sind, so daß sich die erste langgestreckte Faserauflagefläche auf der Rippe befindet.

3. Verbinder nach Anspruch 1 oder 2, bei dem die Folie aus einem Material mit ausreichender elastischer Streckfestigkeit besteht, damit die Hebelabschnitte die Faserauflageflächen gegen die Faserenden drücken können, um die Faserenden in die Faserauflageflächen (18, 23, 30) einzubetten.

4. Verbinder nach Anspruch 1 oder 2, bei dem das Material Metall ist.

5. Verbinder nach Anspruch 4, bei dem die Folie aus einer Aluminiumlegierung mit einer elastischen Streckfestigkeit im Bereich zwischen 35 und 115 MPa besteht.

6. Verbinder nach Anspruch 3, bei dem die Folie aus Aluminium besteht und eine Dicke von etwa 0,5 mm besitzt.

7. Verbinder nach Anspruch 6, bei dem die Aluminiumfolie aus der Aluminiumlegierung 3003 besteht.

8. Verbinder nach Anspruch 7, bei dem das Aluminium den Härtegrad 0 aufweist.

9. Verbinder nach Anspruch 6, bei dem das Aluminium die Legierung 1100 mit dem Härtegrad 0 ist.

10. Verbinder nach Anspruch 1, 2, 3, 4, 5 oder 6, bei dem der Verbinder des weiteren Einrichtungen (72, 73) umfaßt, die in den Öffnungen (81) in den Stirnflächen des Körperelements (71) angeordnet sind, um das Spleißelement (11) zu halten, und um abgeschrägte Löcher auszubilden, die ein Ende der optischen Faser in das Spleißelement (11) einführen.

11. Verbinder nach einem der Ansprüche 1-9, bei dem der Verbinder des weiteren Halteeinrichtungen (57, 64-66) umfaßt, die die Abdeckung (60) in einer ersten Position auf dem Körperelement (41) und in einer zweiten Position halten, in der der Hohlraum (52) verschlossen und ein Spleißvorgang beendet wird.

12. Verbinder nach einem der Ansprüche 1-9, bei dem der Verbinder eine Halteeinrichtung (57) umfaßt, die jeweils die Abdeckung in ihrer Halteposition auf dem Körperelement sowie in ihrer den Hohlraum verschließenden Schließ- und Klemmposition hält, und bei dem die Abdeckung und das Körperelement zusammenwirkende Bereiche (105, 106) aufweisen, in die ein Werkzeug eingesetzt werden kann, um die Abdekkung aus ihrer geschlossenen Position auf dem Körperelement zu heben.

13. Verbinder nach Anspruch 1, bei dem der Verbinder des weiteren eine Auflage (111, 136) umfaßt, wobei eine Vielzahl der Körperelemente (114, 136) auf der Auflage angeordnet sind, und außerdem eine Abdeckung (126, 140) und ein Spleißelement für jedes Körperelement.

14. Verbinder nach Anspruch 13, bei dem die Vielzahl von Körperelementen (114) im allgemeinen eben angeordnet sind, wobei die Seitenwände parallel verlaufen und die Stirnwände im wesentlichen in derselben Ebene angeordnet sind.

15. Verbinder nach Anspruch 13, bei dem die Vielzahl von Körperelementen (136) in einer bogenförmigen Anordnung angeordnet sind.

16. Verbinder nach Anspruch 13, bei dem die Vielzahl von Körperelementen (136) in einer radialen Anordnung angeordnet sind.

## Revendications

1. Raccord d'épissure pour l'exécution d'épissures bout à bout entre deux fibres optiques, comprenant :
un élément d'épissure (11) constitué d'une feuille longitudinalement pliable de matière déformable, la dite feuille présentant trois surfaces longitudinales sensiblement planes d'appui de fibre (18,23,30) qui définissent collectivement entre elles, lorsque ladite feuille est dans ledit état longitudinalement plié, un passage longitudinal de fibre optique ayant une section transversale sensiblement triangulaire pour recevoir deux extrémités de fibres mutuellement en butée à raccorder l'une à l'autre, ladite feuille s'étendant dans la direction latérale au-delà des surfaces d' appui de fibre de manière à définir deux leviers (20,21) qui peuvent être pressés l'un vers l'autre de manière à déplacer aumoins une des dites surfaces du passage de fibre formé, afin de réduire le passage et de déformer chaque surface d'appui de fibre uniformément autour des parties d'extrémité de fibres optiques insérées, pour bloquer lesdites parties d'extrémité des fibres ;
un corps (41,71) de configuration sensiblement parallélépipédique ayant une surface inférieure, une surface supérieure (61;91), des surfaces latérales opposées et des surfaces d'extrémité, et comportant en outre une cavité longitudinale ouverte (52,84) ménagée dans ladite surface supérieure pour recevoir ledit élément d'épissure dans son état longitudinalement plié et avec lesdits leviers (20 ,21) dirigés vers la surface supérieure, et des trous alignés (49,50;81,82) ménagés dans lesdites surfaces d'extrémité et en communication avec ladite cavité longitudinale pour guider les fibres optiques à raccorder dans le passage de fibre de l'élément d'épissure ainsi reçu ; et
un couvercle (60;75) pour fermer la cavité du corps tout en provoquant simultanément le blocage des fibres insérées dans l'élément d'épissure reçu dans cette cavité, ledit couvercle coulissant comprenant une plaque longitudinale (61;91) qui comporte deux ailes longitudinales à effet de came s'étendant vers le bas et mutuellement divergentes (62,63;92,93) et ledit couvercle étant prévu pour être d'abordretenu sur le corps avant sa fermeture, ses deux ailes de came étant placées dans la cavité longitudinale pour recevoir entre elles les deux leviers dudit élément d'épissure, et pour être ensuite amené à sa position de fermeture et de blocage, lesdites deux ailes de came coulissant vers le fond de la cavité pour rapprocher par effet de came lesdits leviers de l'élément d'épissure l'un de l'autre afin d'amener lesdites surfaces d'appui de fibre contre les parties d'extrémité des fibres optiques placées dans ledit passage pour aligner et bloquer lesdites parties d'extrémité en alignement mutuel axial bout à bout.

2. Raccord suivant la revendication 1, dans lequel ladite feuille de matière déformable comporte des surfaces opposées et des bords longitudinaux, deux rainures parallèles (14,15) étant formées dans une surface pour définir deux lignes de pliage, deux des parois qui définissent lesdites rainures ayant des faces convergentes égales (26,27) et formant une nervure centrale (16) qui définit une première desdites trois surfaces allongées d'appui de fibre (18), les deux autres parois latérales (24, 29) formant les rainures étant séparées, à leurs bases, desdites deux des parois par des régions de fond (25, 28) à l'endroit desquelles ladite feuille est pliée, et lesdites deux autres parois latérales s'étendant à partir desdites régions de fond jusqu'à ladite surface (31) de ladite feuille et comportant des régions de surface (23,30) qui définissent les deux autres desdites trois surfaces allongées d'appui de fibre adjacentes auxdits deux leviers (20;21), ces deux autres surfaces d'appui étant disposées en relation angulaire l'une par rapport à l'autre et par rapport à la dite première surface allongée d'appui de fibre sur ladite nervure.

3. Raccord suivant la revendication 1 ou 2, dans lequel ladite feuille est en une matière ayant une résistance de limite élastique suffisante pour permettre aux leviers de serrer lesdites surfaces d 'appui de fibre contre lesdites extrémités des fibres, afin d'encastrer lesdites extrémités des fibres dans lesdites surfaces d'appui de fibre (18,23,30).

4. Raccord suivant la revendication 1 ou 2, dans lequel ladite matière est un métal.

5. Raccord suivant la revendication 4, dans lequel ladite feuille est en un alliage d'aluminium ayant une limite élastique comprise entre 35 et 115 MPa.

6. Raccord suivant la revendication 3, dans lequel ladite feuille est en aluminium et la feuille a une épaisseur de 0,5 mm environ.

7. Raccord suivant la revendication 6, dans lequel ladite feuille d'aluminium est en alliage d'aluminium de type 3003.

8. Raccord suivant la revendication 7, dans lequel ledit aluminium a une trempe 0.

9. Raccord suivant la revendication 6, dans lequel ledit aluminium est un alliage de type 1100 ayant une trempe 0.

10. Raccord suivant la revendication 1,2,3, 4,5 ou 6, dans lequel ledit raccord comprend en outre des moyens (72,73) disposés dans lesdites ouvertures (81) des surfaces d'extrémité dudit corps (71) pour retenir ledit élément d'épissure (11) et pour définir des trous chanfreinés de guidage d'une extrémité d'une dite fibre optique dans ledit élément d'épissure (11).

11. Raccord suivant une quelconque des revendications 1 à 9, dans lequel ledit raccord comprend en outre des moyens d'enclenchement (57,64-66) pour retenir ledit couvercle (60) dans une première position, sur le dit corps (41), et dans une deuxième position de fermeture de ladite cavité (52) et d'achèvement d'une épissure.

12. Raccord suivant une quelconque des revendications 1 à 9, dans lequel ledit raccord comprend des moyens d'enclenchement (57) pour maintenir ledit couvercle dans sa position de retenue sur ledit corps et dans sa position de fermeture et de blocage fermant ladite cavité, respectivement, et ledit couvercle et ledit corps présentent des régions coopérantes (105,106) pour l'insertion d'un outil permettant de soulever le couvercle à partir de sa position fermée sur ledit corps.

13. Raccord suivant la revendication 1, dans lequel ledit raccord comprend en outre un support (111, 136), une pluralité de dits corps (114,136) disposés sur ledit support, et un couvercle (126,140) et un élément d'épissure pour chaque dit corps.

14. Raccord suivant la revendication 13, dans lequel ladite pluralité de corps (114) sont agencés sensiblement dans un plan, les parois latérales étant parallèles et les parois d'extrémité étant disposées sensiblement dans un même plan.

15. Raccord suivant la revendication 13, dans lequel ladite pluralité de corps (136) sont disposés en un agencement courbe.

16. Raccord suivant la revendication 13, dans lequel ladite pluralité de corps (136) sont disposés en un agencement radial.
